# EUROPEAN PATENT SPECIFICATION

(11) **EP 0 386 647 B1**
(45) Date of publication and mention of the grant of the patent: **28.07.1993**
(21) Application number: 90104062.6
(22) Date of filing: 02.03.1990
(51) Int. Cl.: F16K 11/00, E03C 1/04

(54) **A damping means for pressure shocks in sanitary fittings**
Dämpfungsvorrichtung gegen Druckstösse bei sanitären Armaturen
Dispositif amortisseur contre des chocs de pression dans des armatures sanitaires

(30) Priority: 07.03.1989 FI 891084
(43) Date of publication of application: 12.09.1990
(73) Proprietor: ORAS OY, 26100 Rauma10 (FI)
(72) Inventor: Nilsson, Pekka Waldemar, SF-26100 Rauma (FI); Jäpölä, Jari, SF-27100 Eurajoki (FI)
(74) Representative: UEXKÜLL & STOLBERG

(56) References cited:
- US-A- 3 677 295
- US-A- 4 049 019

## Description

The present invention relates to a damping means for pressure shocks to be used in sanitary fittings, which reduces pressure shocks exerted on the pipework by the closing of the sanitary fitting.

Generally used mixer valves are nowadays known as so-called lever faucets, in which both the amount and the temperature of water is adjusted by one single lever. When such a lever faucet is being closed at a normal rate a net pressure shock of approx. 1,6 10⁶ Pa (16 bars) is produced in the pipework, susceptible of damaging the sanitary fitting itself or the connection between this and the water pipework. Previously one tried to dampen these pressure shocks by mounting an elastic rubber ring at an appropriate point of the sanitary fitting. However, this solution has proved to be unsufficiently effective.

The purpose of the present invention is to provide a more effective damping means for pressure shocks, which is easy to install. According to the invention, this has been achieved by mounting a kind of safety valve on the faucet body, the opening pressure of which is 10⁶ Pa (10 bars). The damping means for pressure shocks according to the invention is mounted on the faucet body as close as possible to the closing point, thus enabling it to react on quick pressure shocks. This damping means for pressure shocks also has the advantage of protecting, besides the pipework, the service pipes of the faucet, as well as the connection between the pipework and the faucet from pressure shocks.

The pressure damping means according to the invention comprises a plate having openings for hot and cold water flow to the adjusting assembly. In the walls of these openings a connection with the chambers of the pressure damping means is provided, the actual pressure damping members being positioned in these chambers. These members consist of a spring, at the end of which a ball has been placed. The ball closes the flow connection to the cold and hot water pipes. In the case of a pressure shock, the spring retracts and the ball withdraws from the mouth of the passage letting in water into the pressure damping chamber. The water is discharged from the chamber into the outlet pipe leading to the supply pipe of the faucet as the damping means for pressure shocks is opened. Under these circumstances, no supplementary drain connection is needed.

In order to minimize inertial force, the mobile parts of the damping means for pressure shocks are made of a material that is as light as possible, e.g. of stainless steel and/or plastic.

The invention is described in greater detail in the enclosed figures, in which figure 1 shows a side perspective of the damping means for pressure shocks, figure 2 shows a top view of the damping means for pressure shocks, and figure 3 shows the position of the damping means for pressure shocks in a lever faucet.

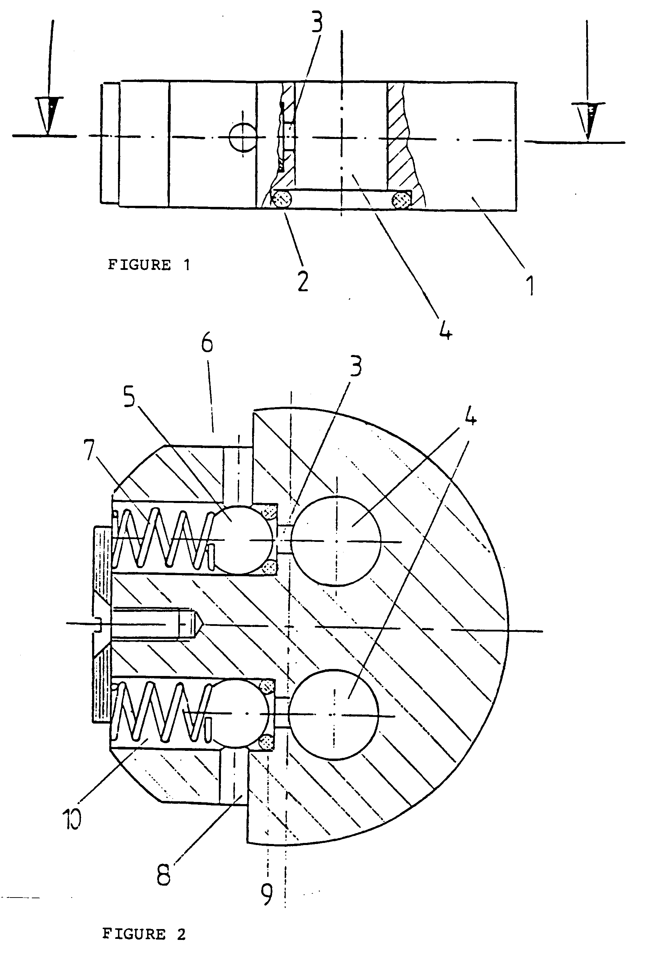

Figure 1 illustrates a pressure damper having a plate-shaped body 1. The cold and hot water passages 4 pass through the body 1, the passages being sealed by means of O-rings 2. Openings 3, through which water can flow to the chambers of the pressure damper, are provided in the wall of the hot and cold water passages 4.

In figure 2, the pressure damper of the invention is shown from above, showing the passages 4 of both hot and cold water. In case of a pressure shock, water flows through the openings 3 into the chambers 10 of the pressure damper, which are for med of drillings perpendicular to the connections, and in which the actual pressure damping members 5 and 7 are placed. The pressure damping members consist of a spring 7 and of a ball 5 supported by one end of the spring. Under the effect of a pressure shock the spring 7 retracts, whereby the ball 5 withdraws from the opening 3 letting in water. At the upper part of the side of the chamber 10 an outlet pipe 8 is provided, which opens into a slot 6 in the body of the damping means. The water discharged through the opening 3 under the effect of a pressure shock is removed through the outlet pipe 8 and the slot 6 into the supply pipe of the faucet. When in rest position, the ball 5 of the pressure damping means 5, 7 is sealed with the O-ring 9.

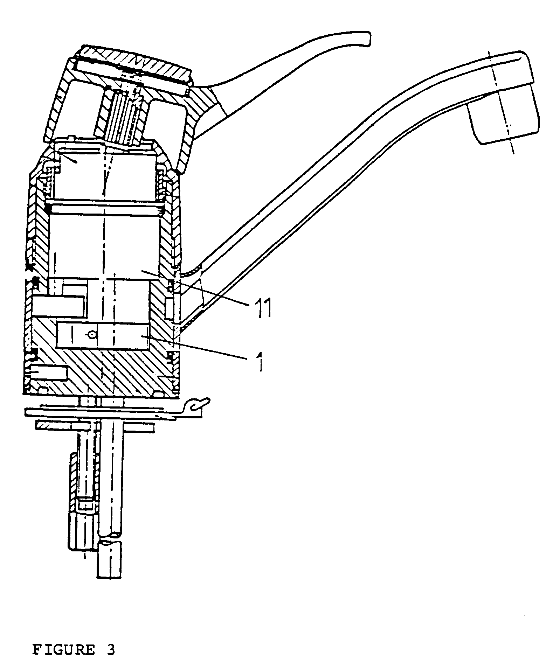

Figure 3 shows the position of the pressure damping means 1 in a lever faucet below the adjusting assembly 11.

## Claims

1. A damping means for pressure shocks used in sanitary fittings having a faucet, **characterized** in that said damping means consists of a plate-shaped body (1), in which are provided:
cold and hot water passages (4) passing through the body (1), in the wall of each passage an opening (3) is formed; chambers (10) communicating through the openings (3) with the cold and hot water passages (4) respectively and through outlet pipes (8) and slots (6), which are also formed in said body (1) with a supply pipe of the faucet;
pressure damping members (5, 7) in each of said chambers (10) consisting of a spring (7) and a ball (5) actuated by the spring (7) such that in its rest position the ball (5) covers the opening (3) and in case of a pressure shock, the spring (7) retracts, the ball (5) withdraws from the opening (3) and water flows through the opening (3) into the chamber (10) and through the outlet pipe (8) and the slot (6) from the chamber (10) into the supply pipe of the faucet.

2. A damping means for pressure shocks according to claim 1, **characterized** in that when in rest position, the balls (5) are sealed with a O-ring (9) from the side of the openings (3).

3. A damping means for pressure shocks according to claim 1 or 2, **characterized** in that the springs (7) are made of stainless steel.

4. A damping means for pressure shocks according to claim 1 or 2, **characterized** in that the balls (5) are made of stainless steel or plastic.

5. A damping means for pressure shocks according to any of the preceding claims, **characterized** in that the chambers (10) are formed of drillings perpendicular to the passages (4) and the springs (7) are coil springs placed in the drillings.

## Patentansprüche

1. Druckdämpfungsmittel für Druckstöße, das bei Sanitärarmaturen verwendet wird, die einen Absperrhahn haben, **dadurch gekennzeichnet**, daß dieses Dämpfungsmittel aus einem plattenförmigen Körper (1) besteht, in welchem Kalt- und Warmwasserkanäle (4) vorgesehen sind, die durch den Körper (1) hindurchgehen, wobei in der Wand jedes Kanals eine Öffnung (3) ausgebildet ist; Kammern (10), die durch die Öffnungen (3) mit dem Kalt- beziehungsweise Warmwasserkanal (4) und durch Auslaßrohre (8) und Schlitze (6), welche ebenfalls in dem Körper ausgebildet sind, mit einem Zuleitungsrohr für die Armatur in Verbindung stehen; Druckdämpfungselementen (5, 7) in jeder dieser Kammern (10), die aus einer Feder (7) und einer Kugel (5) bestehen, die durch die Feder (7) derart betätigt wird, daß die Kugel (5) in ihrer Ruhestellung die Öffnungen (3) abdeckt und sich im Fall eines Druckstoßes die Feder (7) zurückzieht, wodurch sich die Kugel (5) von der Öffnung (3) abhebt und Wasser durch die Öffnungen (3) in die Kammer (10) und durch das Auslaßrohr (8) und den Schlitz (6) aus der Kammer (10) in das Zuleitungsrohr für die Armatur fließt.

2. Dämpfungsmittel für Druckstöße nach Anspruch 1, **dadurch gekennzeichnet**, daß die Kugeln (5) dann, wenn sie sich in Ruhestellung befinden, mit einem Rundring (9) gegenüber der Seite der Offnungen (3) abgedichtet werden.

3. Dämpfungsmittel für Druckstöße nach Anspruch 1 oder 2, **dadurch gekennzeichnet**, daß die Federn (7) aus rostfreiem Stahl hergestellt sind.

4. Dämpfungsmittel für Druckstöße nach Anspruch 1 oder 2, **dadurch gekennzeichnet**, daß die Kugeln (5) aus rostfreiem Stahl oder Kunststoff hergestellt sind.

5. Dämpfungsmittel für Druckstöße nach irgendeinem der vorangegangenen Ansprüche, **dadurch gekennzeichnet**, daß die Kammern (10) aus Bohrungen senkrecht zu den Kanälen (4) gebildet werden und die Federn (7) Spiralfedern sind, die in den Bohrungen angeordnet sind.

## Revendications

1. Moyens d'amortissement de chocs de pression utilisés dans des articles sanitaires ayant un robinet, caractérisés en ce que lesdits moyens d'amortissement sont constitués d'un corps (1) en forme de plaque, dans lequel sont réalisés :
des passages (4) d'eau froide et d'eau chaude passant à travers le corps (1), une ouverture (3) étant formée dans la paroi de chaque passage; des chambres (10) communiquant à travers les ouvertures (3) avec les passages (4) respectifs d'eau froide et d'eau chaude et à travers des tuyaux (8) de sortie et des encoches (6), également formés dans ledit corps (1) avec un tuyau d'alimentation du robinet;
les éléments (5, 7) d'amortissement de pression dans chacune desdites chambres (10) étant constitués d'un ressort (7) et d'une bille (5) actionnée par le ressort (7) de telle sorte que dans sa position de repos la bille (5) recouvre l'ouverture (3) et dans le cas d'un choc de pression, le ressort (7) se rétracte, la bille (5) se retire de l'ouverture (3) et l'eau s'écoule à travers l'ouverture (3) jusque dans la chambre (10) et à travers le tuyau de sortie (8) et l'encoche (6) à partir de la chambre (10) à l'intérieur du tuyau d'alimentation du robinet.

2. Moyens d'amortissement de chocs de pression selon la revendication 1, caractérisés en ce que dans la position de repos, la bille (5) est rendue étanche par rapport à un côté de l'ouverture (3) par un joint torique (9).

3. Moyens d'amortissement de chocs de pression selon la revendication 1 ou 2, caractérisés en ce que le ressort (7) est en acier inoxydable.

4. Moyens d'amortissement de chocs de pression selon la revendication 1 ou 2, caractérisés en ce que la bille (5) est en acier inoxydable ou en matière plastique.

5. Moyens d'amortissement de chocs de pression selon l'une quelconque des revendications précédentes, caractérisés en ce que les chambres (10) sont formées de perçages perpendiculaires aux passages (4) et les ressorts (7) sont des ressorts hélicoïdaux placés dans les perçages.
